# EUROPEAN PATENT APPLICATION

(11) **EP 4 703 694 A1**
(43) Date of publication of application: **04.03.2026**
(21) Application number: 25198540.4
(22) Date of filing: 27.08.2025
(51) Int. Cl.: G01G 15/00, B29B 7/60

(54) **BULK MATERIAL DOSING ASSEMBLY, DOSING SYSTEM AND METHOD**

(30) Priority: 29.08.2024 IT 202400019405
(71) Applicant: DS4 S.r.l, 24066 Pedrengo, (BG) (IT)
(72) Inventor: PETROGALLI, Angelo, I-24066 Pedrengo, BERGAMO (IT)
(74) Representative: De Lorenzo, Danilo

(57) **Abstract**

A dosing assembly (1) of bulk material in a collection container (4) comprises a first receptacle (10) suitable for containing a first bulk material having a first size and a second receptacle (10') suitable for containing a second bulk material having a second size, different from the first size. For each of said first receptacle (10) and second receptacle (10'), the dosing assembly comprises a respective vibrator device (2, 2'). Furthermore, a weighing device (3) is suitable for detecting the weight of the amount of first bulk material and second bulk material present in a collection container (4) and discharged from the first receptacle (10) and the second receptacle (10'). An electronic control unit (5) is configured to command the vibrator device (2, 2') based on the weight detected by the weighing device (3) and to send a control signal to the vibrator device (2, 2') to vibrate the first receptacle (10) or the second receptacle (10') so as to move forward the first bulk material or the second bulk material in a discharge direction (D) towards the collection container (4) and in a backward direction (B), opposite to the discharge direction (D). A dosing system and a dosing method comprise the dosing assembly.

## Description

### Field of application

The present invention refers to the field of the dosing of bulk material, in particular in the context of machines employed for dosing bulk material such as materials in granular or particulate form, such as for example building material like sand, gravel, crushed stone, or material of the food sector such as seeds, grain, dried fruit, flours or powders or tablets in the pharmaceutical or supplements field or precious materials, such as for example granules of precious metals or diamonds and precious stones. An example of bulk material concerns gold granules, for which there exist dosing systems used in the process of manufacturing gold ingots, where the precise measurement of the granules of precious metal is essential to achieve the desired weight and purity of the final product.

The present invention concerns a bulk material dosing assembly and a bulk material dosing system comprising the dosing assembly. Furthermore, the present invention relates to a method of dosing bulk material.

### Prior art

A typical example of a vibrating dosing system used in the building sector is the vibrating doser for the handling of bulk materials such as gravel, sand and aggregates. These systems are fundamental for the precise dosing of materials used in the production of concrete, mortars and other building compounds, wherein the control of the quantity and composition of the material is crucial to ensure the final quality of the product.

The vibrating dosing system for building generally consists of a vibrating feeder mounted under a silo or a storage hopper of the material. The vibrating feeder is provided with an electric or pneumatic vibrating motor that generates high-frequency vibrations, transmitting the vibrating energy to the support structure and to the surface on which the material is transported. The bulk material is then moved along an inclined vibrating table or a vibrating channel up to the discharge point.

A vibrating dosing system for the food industry is typically designed to handle precisely delicate bulk materials such as seeds, dried fruit, cereals and other granular or powder products. These systems are essential to ensure accurate and uniform dosing of ingredients during packaging, mixing and food production processes, where the quality and consistency of the final product are of fundamental importance.

The typical system consists of a vibrating feeder mounted under a storage container or a hopper, from which the food material is taken. The vibrating feeder is provided with a low-frequency electric motor or an electromagnetic system that generates delicate and controlled vibrations. These vibrations are transmitted to the surface of the vibrating channel or table, moving the food material towards the dosing point.

For both fields, the key of the system is the capability to adjust precisely the amplitude and frequency of the vibrations, allowing the movement of the material to be adapted to its specific physical characteristics. For example, for particularly fragile products such as nuts or almonds, it is fundamental to maintain vibrations at low intensity to avoid breakage or damage. For more granular or powdery materials, such as flour or sugar or fine sands, the system must be optimized to prevent segregation and ensure a constant flow.

In the goldsmith and refinery field, it is an established practice to use precious metal granules, with particle sizes ranging from 10 mg to 600 mg, as a semifinished product in the production chain. This process is particularly relevant in the production of gold ingots, where the first step consists in the creation of granules by means of melting and pouring into water. Subsequently, the granules are dosed precisely to feed a melting furnace that generates the ingot.

The accuracy of this dosing process is of crucial importance. To ensure that the final ingot contains the exact quantity of precious metal, the dosing must be as precise as possible, ideally with a maximum deviation of only 10-20 mg in the final weight of the ingot. This level of precision is fundamental to maintain the quality and consistency of the ingots produced, especially in high added-value sectors such as jewellery and investment gold.

Currently, several dosing systems are available on the market designed to meet the need for precision in the production of gold ingots. The machines used in these known systems represent the standard in the field and are composed of several key components:
- one or more hoppers for storing the granules, possibly sieved into different particle sizes to ensure a homogeneous distribution of the particles;
- one or more leaf spring vibrators, designed for the advancement of the granules towards a precision weighing module;
- precision weighing modules (scales) that measure the exact amount of granules dosed;
- an advancement and cutting system of precious metal wire, calibrated to a specific diameter to allow fine adjustment of the final weight.

The typical operation of these systems provides for a first approach to the target weight by dosing the granules, followed by the cutting of a segment of precious metal wire of the appropriate length to achieve the desired weight.

Although these existing dosing systems have demonstrated their effectiveness in many applications, they nevertheless have significant drawbacks.

The main problems associated with these systems include the tendency of the material to segregate or compact during vibrating transport, the need to avoid damage or breakage of fragile materials, as well as the management of dust and the minimization of the noise produced.

Furthermore, these systems often require additional devices for the exact calibration of the target weight to be achieved, whether they are devices that add material separately with respect to the bulk material, or devices that discard a packaging with an incorrect dose.

For example, in the field of precious metals, one of the most relevant problems concerns the management of the precious metal wire used for the final adjustment of the weight. This wire, which must be produced manually with particular attention to the diameter, introduces several problems in the production process.

Firstly, the production of the wire itself is laborious and costly. The process requires manual intervention to ensure that the wire is produced according to the correct specifications, which may vary depending on the specific requirements of the batch being processed. This not only increases the overall production costs but also introduces variability and potential errors in the process.

Secondly, it is difficult to maintain traceability of the metal used in the wire as compared with the granules employed in the same batch. Considering that the wire and the granules often come from different batches of metal, ensuring that the final ingot meets the stringent standards of purity and composition can be problematic. This lack of traceability can lead to inconsistencies in the final product, which are particularly critical in sectors where the quality of the gold ingots is decisive.

Furthermore, the dependence on the wire for the final adjustment of the weight adds complexity to the dosing process, increasing the time required to reach the precise weight. This additional step can slow down the entire production cycle, reducing the efficiency of the manufacturing process and increasing the probability of errors.

### Summary of the invention

One of the purposes of the present invention is to overcome these limits by improving the dosing process of bulk material to achieve the precision necessary to eliminate the need for a weight adjustment intervention by means of an additional device, different with respect to the vibrator itself, whether it be a device for the addition of further material, or a discarding device.

A further purpose of the present invention is to achieve precision in the dosing of bulk material, within a predetermined weight tolerance, within a predetermined time interval for each dose. By improving the accuracy and efficiency of the bulk material dosing system, the invention aims to simplify the production process, reduce costs and improve the overall quality and consistency of the products obtained downstream of dosing.

This improvement in the dosing system is intended to have a significant impact in the sectors of the prior art, providing a more reliable and economically advantageous solution for the production of products of improved quality.

The aforesaid purposes are achieved by means of a dosing assembly, a dosing system and a dosing method in accordance with the attached independent claims. The dependent claims specify further advantageous optional features.

### Description of the drawings

The features and advantages of the dosing assembly, of the dosing system and of the dosing method according to the present invention will in any case be evident from the description reported below of some preferred embodiments, given by way of example and not limitation, with reference to the accompanying figures, wherein:

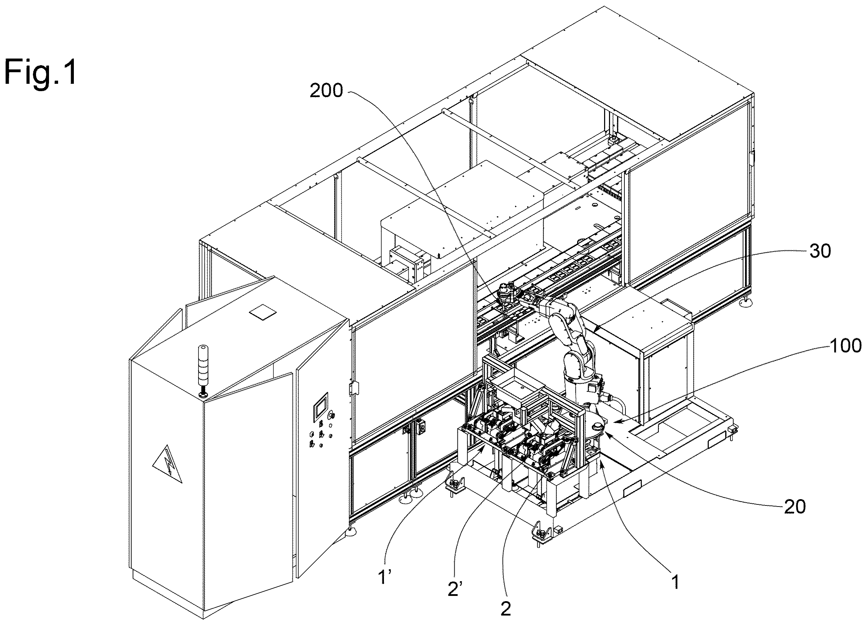

- Figure 1 shows an axonometric view of a gold ingot production plant comprising a transport system for gold ingot casting brackets and a bulk material dosing system, in particular gold granules, in accordance with one embodiment of the present invention;

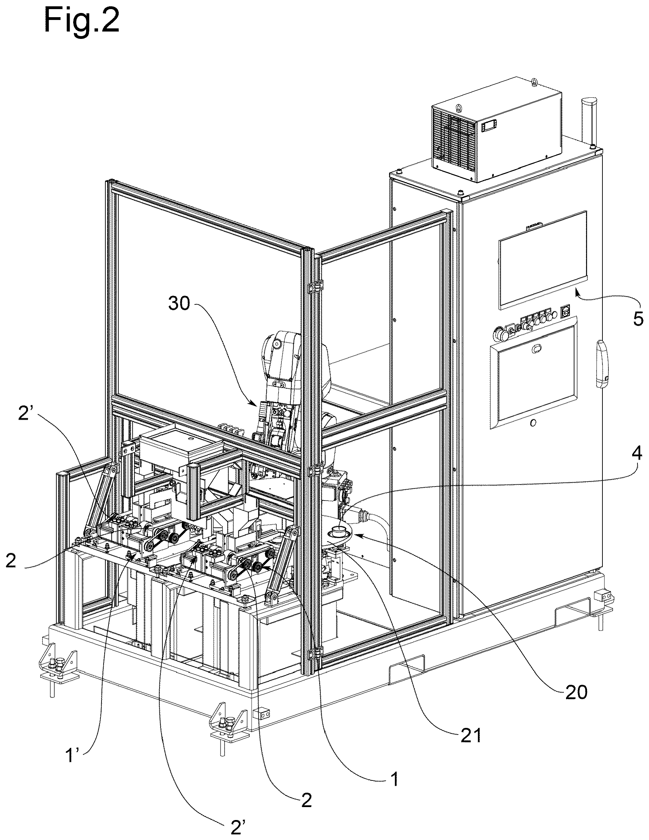

- Figure 2 shows an axonometric view of a bulk material dosing system in accordance with one embodiment of the present invention;

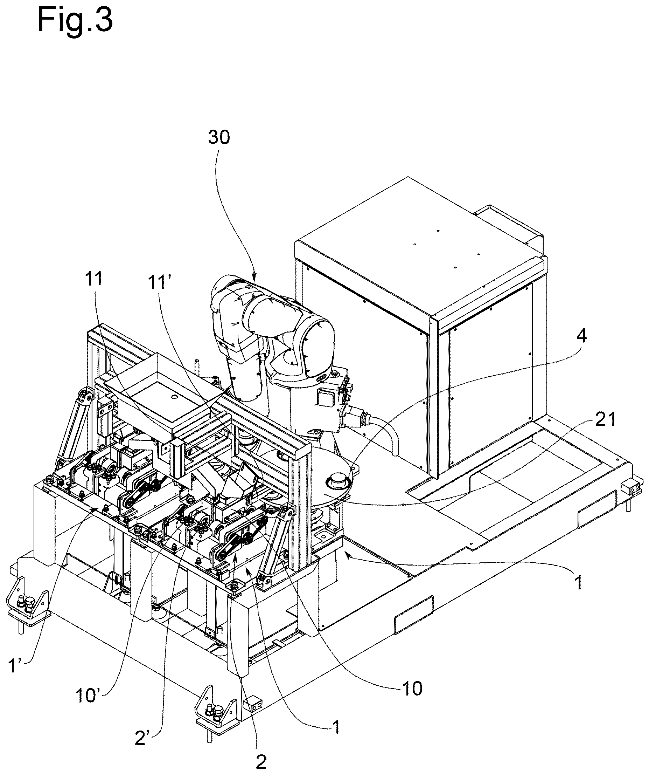

- Figure 3 shows an enlarged axonometric view of the bulk material dosing system of figure 2 in accordance with one embodiment of the present invention, wherein some components shown in figure 2 have been artificially removed for greater comprehension clarity;
- Figure 4 shows an enlarged axonometric view of the bulk material dosing system in accordance with one embodiment of the present invention, wherein further components already shown in figure 2 and figure 3 have been artificially removed for greater comprehension clarity;

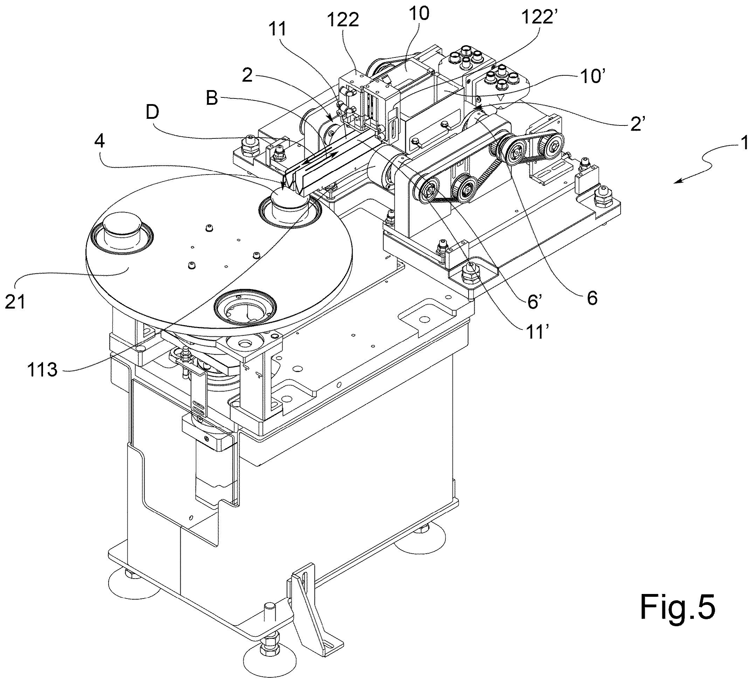

- Figure 5 shows an enlarged axonometric view of the bulk material dosing system of figure 4 in accordance with one embodiment of the present invention, wherein further components already shown in figure 4 have been artificially removed for greater comprehension clarity.
- Figure 6 shows a side elevation view of the bulk material dosing system of figure 5;

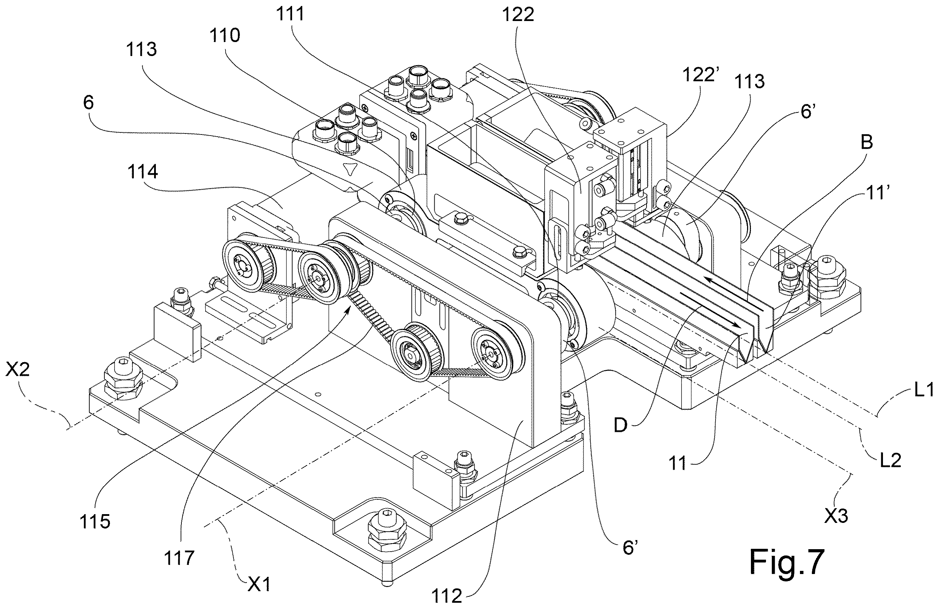

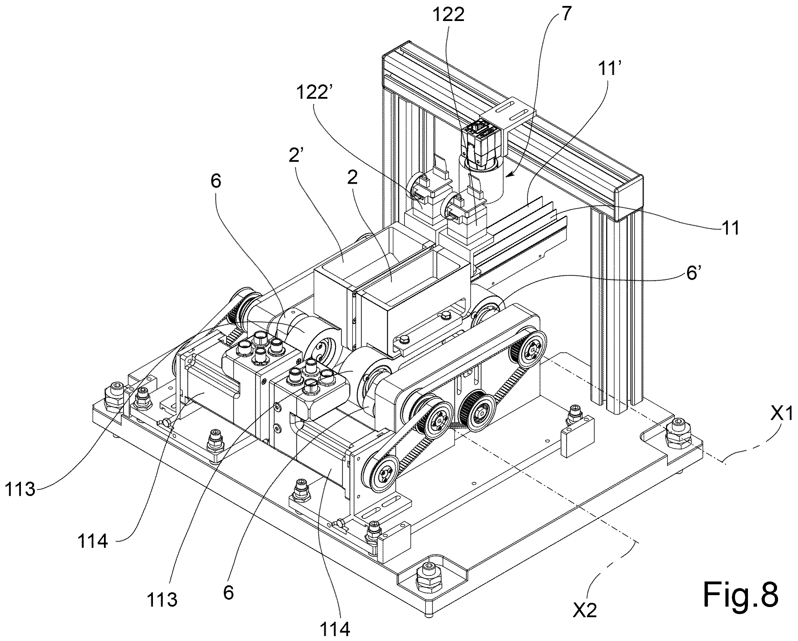

- Figure 7 shows an axonometric view of a dosing assembly in accordance with one embodiment of the present invention, wherein the weighing device has been artificially removed for greater comprehension clarity;

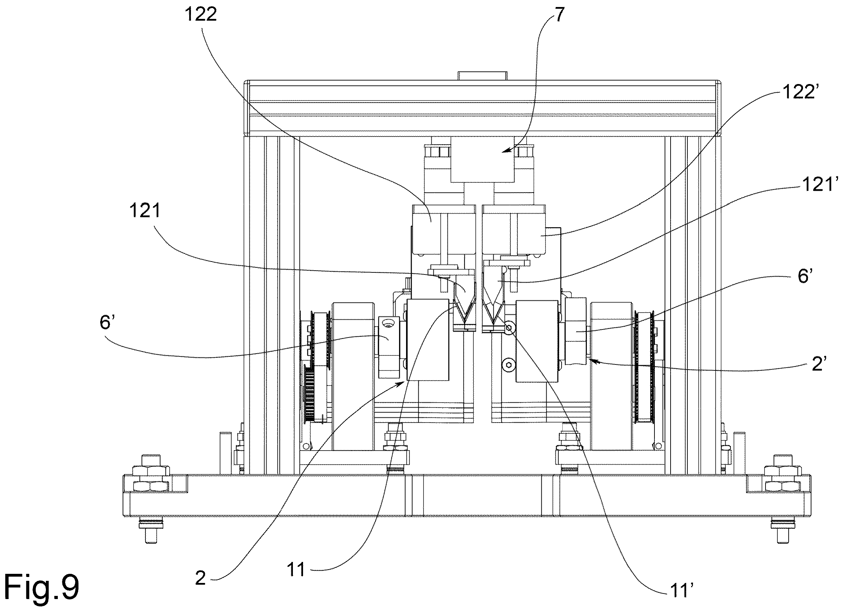

- Figure 9 shows a front elevation view of the dosing assembly in accordance with one embodiment of the present invention, wherein the weighing device has been artificially removed for greater comprehension clarity;

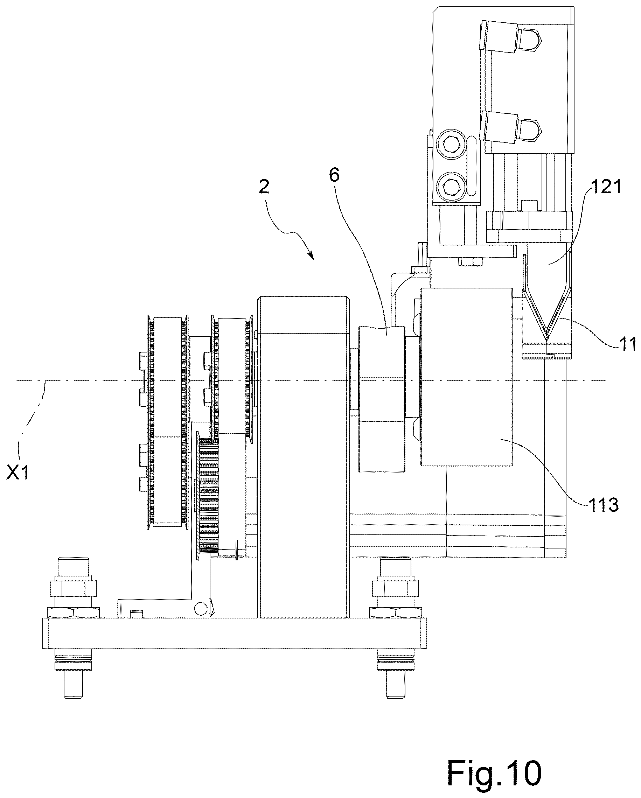

- Figure 10 shows a detailed front elevation view of the dosing assembly of figure 9;

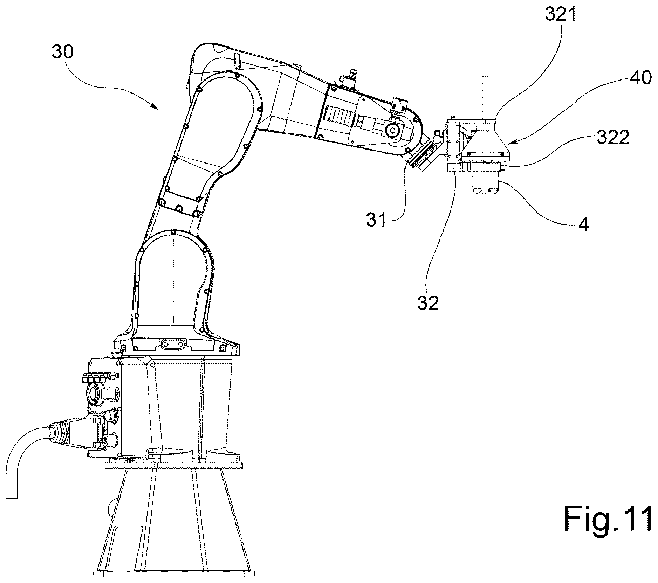

- Figure 11 shows a robotic manipulator with an end-effector in accordance with one embodiment of the present invention;
- Figure 12 shows an end-effector in accordance with one embodiment of the present invention, in a loading configuration of a collection container of bulk material;
- Figure 12a shows the end-effector of figure 12 in a closed configuration, wherein the collection container of bulk material is closed to prevent the escape of bulk material during the handling by the robotic manipulator;
- Figure 12b shows the end-effector of figure 12 in an open configuration, wherein the collection container of bulk material is overturned with respect to the configuration of figure 12 and is free to discharge the bulk material into a funnel device of the end-effector in accordance with one embodiment of the present invention.

### Detailed description

Notwithstanding the present invention is described below with reference to preferred embodiments represented in the drawing tables, the present invention is not limited to the embodiments described below and represented in the tables. On the contrary, the embodiments described and represented clarify some aspects of the present invention.

With reference to the aforesaid accompanying figures, by the reference number 1 a bulk material dosing assembly 1 has been overall denoted for a bulk material dosing system 100 suitable for dosing an amount of bulk material, for example gold granules intended for a bracket 200 for a melting furnace for gold granules to make gold ingots.

The dosing assembly 1 comprises a first receptacle 10, for example a hopper, suitable for containing a first bulk material, for example first gold granules, having a first size and a second receptacle 10' suitable for containing a second bulk material, for example second gold granules, having a second size, different from the first size, preferably a smaller size. For example, the first receptacle 10 contains a first bulk material with coarse size, for example with granules having an average diameter greater than one millimetre, and the second receptacle 10' contains a second bulk material with fine size, for example with granules having an average diameter lower than one millimetre.

For each of said first receptacle 10 and second receptacle 10', the dosing assembly comprises a respective vibrator device 2, 2' operatively connected to the respective first receptacle 10 and to the respective second receptacle 10' to cause it to vibrate.

In the following description, reference will be made to embodiments of the vibrator device 2, 2' with reference to the sole first receptacle 10, but it is clear that since each of said first receptacle 10 and second receptacle 10' is associated with a respective vibrator device 2, 2', what applies for the first receptacle 10 and the related connections to the respective vibrator device 2, also applies for the second receptacle 10' in an analogous manner with its own vibrator device, thus duplicating the features and functionalities. Therefore, the detailed description that will be given below with reference to the vibrator device 2 with the respective first receptacle 10, applies analogously for a second vibrator device 2' with its own second receptacle 10'. This is moreover evident from the accompanying figures.

The vibrator device 2, 2' may be a mechanical vibrator with eccentrics, or with pendulum, or with a piston, or a pneumatic vibrator, for example with ball, or with turbine or with piston, or an electromagnetic vibrator.

In particular, an advantageous embodiment provides that the vibrator device is a mechanical vibrator with eccentrics.

In particular, in accordance with one embodiment, the vibrator device 2, 2' comprises a pair of eccentrics 110, 111, rotatably fixed to a support base 112, each suitable for rotating eccentrically around its own rotation shaft X1, X2 to cause the first receptacle 10 to vibrate.

Preferably, the vibrator device 2, 2' comprises a base body 113 in which the eccentrics 110, 111 of the pair of eccentrics are rotatably inserted in a spaced manner along a longitudinal axis X3. The base body 113 is joined to the first receptacle 10 to transmit the vibration thereof. Preferably, the base body 113 is joined directly to the first receptacle 10 or to the second receptacle 10'.

Preferably, the pair of eccentrics 110, 111 and the base body are cantilever supported with respect to the support base 112.

Preferably, the vibrator device 2, 2' comprises an electric actuator 114 operatively connected to the pair of eccentrics 110, 111 to set them in rotation. Preferably the electric actuator 114 is connected to the pair of eccentrics by means of a belt/s transmission system 115.

Preferably, the rotation shafts of the pair of eccentrics 110, 111 are driven by a single transmission belt 117.

In accordance with one embodiment, the dosing assembly 1 comprises at least a first balancing mass 6 mounted on each vibrator device 2, 2' and having a mass such as to dampen undesired vibrations and reduce the transmission of vibrations from the first receptacle 10 to the second receptacle 10' or vice versa.

In accordance with one embodiment, the dosing assembly 1 comprises at least a first balancing mass 6 and a second balancing mass 6', wherein the first balancing mass 6 is operatively coupled to one 110 of the pair of eccentrics and the second balancing mass 6' is operatively coupled to the other 111 of the pair of eccentrics.

Preferably, the first balancing mass 6 and the second balancing mass 6' are a single body with a through hole suitable for being engaged on the respective rotation shaft X1, X2 of the pair of eccentrics 110, 111. Furthermore, preferably each first balancing mass 6 and second balancing mass 6' has a centre of mass misaligned with respect to the central axis of the through hole.

Preferably, the first balancing mass 6 is mounted on the rotation shaft X2 of one eccentric 110 of the pair of eccentrics and the second balancing mass 6' is mounted on the rotation shaft X1 of the other eccentric 111.

The dosing assembly 1 further comprises a weighing device 3, for example a load cell or a scale, suitable for detecting the weight of the amount of first bulk material and second bulk material present in a collection container 4 and discharged from the first receptacle 10 and the second receptacle 10'. For example, the collection container 4 is a cup arranged in contact with and above the weighing device.

The dosing assembly 1 comprises an electronic control unit 5 configured to command the vibrator device 2, 2' based on the weight detected by the weighing device 3 and to send a control signal to the vibrator device 2, 2' to vibrate the first receptacle 10 or the second receptacle 10' so as to move forward the first bulk material or the second bulk material in a discharge direction D towards the collection container 4.

Therefore, the weighing device is configured to send a signal relating to the weight of the collection container 4 also during the discharge of the bulk material into the collection container 4.

The electronic control unit 5 is configured to send a control signal to the vibrator device 2, 2' to move the first bulk material or the second bulk material back in a backward direction B, opposite to the discharge direction D. This makes it possible to control the discharge of the bulk material even more precisely, since the imparted backward movement makes it possible to discharge the bulk material into the collection container 4 in a more controlled manner, granule by granule, without risking to discharge an excessive quantity of bulk material, with the consequent risk of exceeding the target weight to be achieved.

In accordance with one embodiment, the dosing assembly 1 of the present invention is preferably without an additional weight correction device. By additional weight correction device it is meant a device suitable for correcting the weight of the bulk material contained in the collection container 4 by the addition of further material, other than the bulk material contained in the first receptacle 10 and/or in the second receptacle 10'. Furthermore, by additional weight correction device it is also possible to mean a device for discarding material from the collection container 4 or for discarding the entire collection container.

For example, in the case of a dosing assembly of gold granules for the making of gold ingots, the additional weight correction device is a gold wire cutting system for achieving the target weight in the collection container 4, known in the field.

The fact that the dosing assembly 1 of the present invention is preferably without an additional weight correction device is made possible precisely thanks to the control of the vibrator device both in the forward movement and in the backward movement of the bulk material.

Preferably, the dosing assembly 1 comprises a first evacuation channel 11 joined to the first receptacle 10 and a second evacuation channel 11' joined to the second receptacle 10'. For example, the first evacuation channel 11 and the second evacuation channel 11' are open channels which extend preferably along a longitudinal direction L1, L2. Preferably, the cross section, perpendicular to the longitudinal direction L1, L2, of the first evacuation channel and of the second evacuation channel is a V-section or a U-section.

For example, the backward movement imparted on the first receptacle 10 or on the second receptacle 10' and, consequently or independently, on the first evacuation channel 11 and/or on the second evacuation channel 11', allows the arrangement of the granules of the first bulk material or of the second bulk material in a single row, without granules being stacked one on top of the other inside the first or the second evacuation channel 11, 11'. This therefore makes it possible to discharge one granule at a time into the collection container 4 when the vibrator device 2, 2' is again actuated in the discharge direction D or, incidentally for some granules, also during the actuation in the backward direction B.

In accordance with one embodiment, the electronic control unit 5 is configured to send a control signal to the vibrator device 2, 2' to move the first bulk material or the second bulk material back in the backward direction B, as long as the first bulk material or the second bulk material has been arranged so that the granules of the first bulk material or of the second bulk material are arranged in a single row, that is composed of single granules arranged one behind the other, preferably respectively inside the first evacuation channel 11 and/or the second evacuation channel 11', as described in the previous paragraph.

In accordance with one embodiment, the dosing assembly 1 further comprises a first partialization device 12 associated with the first evacuation channel 11 and a second partialization device 12' associated with the second evacuation channel 11'. Each of said first partialization device 12 and second partialization device 12' is suitable for interacting respectively with the first evacuation channel 11 and with the second evacuation channel 11' to adjust the flow of bulk material flowing in each first evacuation channel 11 and second evacuation channel 11' respectively from the first receptacle 10 towards the collection container 4 and from the second receptacle 10' towards the collection container 4.

In accordance with one embodiment, the first partialization device 12 and the second partialization device 12' each comprise a respective gate operating device 122, 122' and a respective gate 121, 121'. The gate 121, 121' is operatively connected with the respective gate operating device 122, 122' to be moved with respect to the respective first evacuation channel 11 or second evacuation channel 11' and consequently increase or decrease the passage of bulk material downstream of the gate 121, 121' in the direction towards the collection container 4. Preferably, the gate operating device 122, 122' is controllable by a gate control command sent by the electronic control unit 5 to determine the position of the gate 121, 121'. For example, the gate operating device 122, 122' is a hydraulic or pneumatic or electric actuator operatively connected with the gate 121, 121' to move it with respect to the evacuation channel 11, 11', for example in a direction perpendicular to the discharge direction (D) of the bulk material.

In accordance with one embodiment, the dosing assembly 1 comprises a flow detection device 7, for example a video camera, suitable for detecting a flow signal (for example an image or a video or a processing thereof) relating to the flow of bulk material in the first evacuation channel 11 and/or second evacuation channel 11'.

Preferably, the electronic control unit 5 is configured to command the gate operating device 122, 122' by means of a gate control command based on the flow signal coming from the flow detection device 7.

Preferably, the electronic control unit 5 is configured to command the vibrator device 2, 2' to move forward the first bulk material or the second bulk material with increasing speeds and, in case of detection of a bulk material flow below a certain preset threshold, the control unit 5 is configured to send a gate control command to further open the gate 121, 121', for example to dislodge any bulk material with excessively large size.

In accordance with one embodiment, the dosing assembly 1 comprises a filling detection device suitable for detecting the filling state of the first receptacle 10 and/or of the second receptacle 10', for example a time-of-flight sensor. The electronic unit 5 is therefore configured to receive a signal relating to the filling state of the first receptacle 10 and/or of the second receptacle 10' from the filling detection device and send an alarm state or actuate a further gate discharge device for the filling of bulk material from a further container.

As shown in the accompanying figures, it is clear that the present invention also concerns a dosing system 100 comprising a dosing assembly 1 in accordance with any one of the embodiments described in the present description and a collection container transport system 20 suitable for transporting the collection containers 4 to and from the weighing device 3.

As can be appreciated from the accompanying figures, in accordance with a variant embodiment, the dosing system 100 may comprise more than one dosing assembly 1 in accordance with any one of the embodiments described in the present description and more than one collection container transport system 20 suitable for transporting the collection containers 4 to and from the weighing device 3. For example, in the accompanying figures a dosing system 100 is shown having two dosing assemblies 2, 2' and two transport systems 20, 20' in turn served for example by a single robotic manipulator 30. This makes it possible to increase efficiency and production speed.

In the following, therefore, for simplicity a dosing system 100 with one dosing assembly 1 and one transport system 20 will be described, but it is clear that the skilled person understands that the technical features of such dosing assembly 1 and transport system can be duplicated two or more times depending on the needs.

In accordance with one embodiment, the collection container transport system 20 comprises a base 25 and a rotating table 21 rotatably supported by the base and comprising container seats 210, 211, 212. Each container seat 210, 211, 212 is suitable for receiving a collection container 4.

Preferably, the rotating table 21 is suitable for being rotated to bring each container seat 210, 211, 212 selectively close to the weighing device 3.

Preferably, each container seat 210, 211, 212 is a through opening in the rotating table 21.

Preferably, the rotating table 21 is supported by the base 25 in a relatively translatable manner with respect to the weighing device 3 along a vertical direction Y parallel to the rotation axis K of the rotating table 21 or along a direction parallel to gravity.

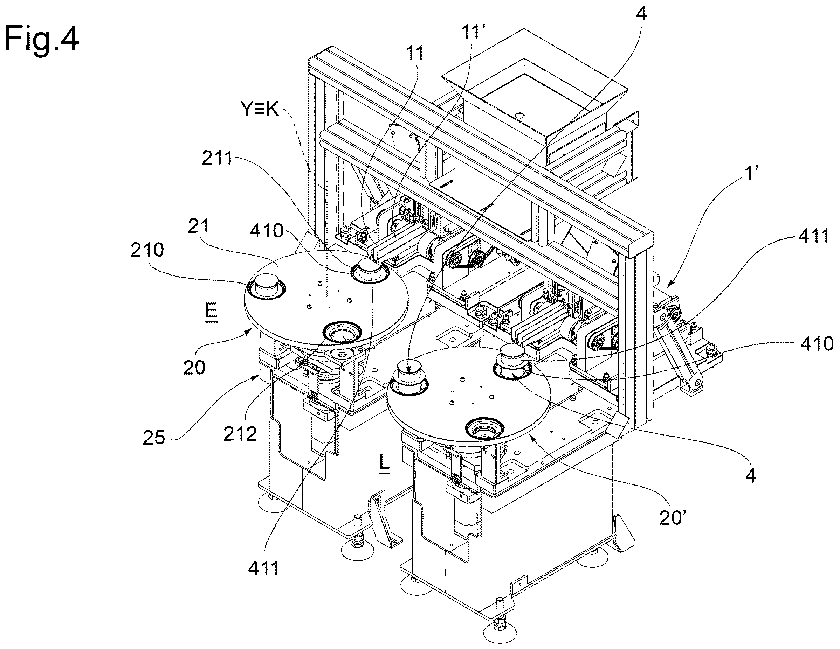

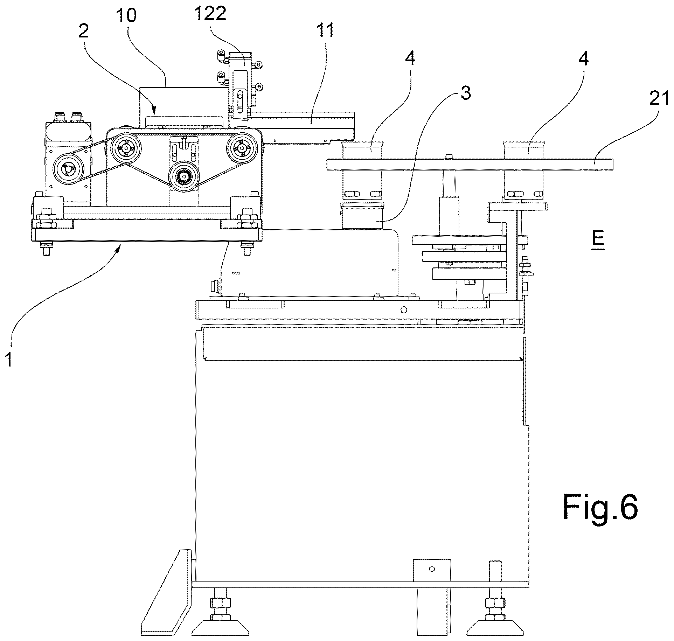

In this way, the rotating table 21 is suitable for assuming an elevated configuration E, for example shown in figure 4 and in figure 6, wherein the rotating table 21 is in a raised position along the vertical direction Y and wherein the container seats 210, 211, 212 support the weight of the collection containers 4 and wherein the rotating table 21 can rotate around the rotation axis K of the table to bring the collection container 4 close to the weighing device 3, without therefore hindering the weighing device 3 during the rotation.

Furthermore, the rotating table 21 is suitable for assuming a lowered configuration L, for example shown in figure 4 on the right, wherein the rotating table 21 is in a lowered position along the vertical direction Y, that is in a position lower than the raised position along the vertical direction Y, and wherein the container seat 211 placed near the weighing device 3 does not support the weight of the collection container 4, so that the weighing device 3 can measure the weight of the bulk material being discharged.

Preferably, the collection container 4 comprises an outer lip 410, which projects from a side wall 411 of the collection container 4 and which is suitable for abutting against the container seat 210, 211, 212 when the rotating table 21 is in its raised configuration E, so as to lift the collection container 4 with respect to the weighing device 3 and thus allow the rotation of the rotating table 21.

In accordance with one embodiment, the dosing system 100 comprises a robotic manipulator 30 configured to pick up and deposit the collection container 4 from/onto the rotating table 21 and to discharge the bulk material elsewhere, for example, in the case of dosing gold granules, into a graphite bracket 200 intended for a melting furnace.

Preferably, the robotic manipulator 30 comprises an end-effector 31 on which a gripper 32 is mounted. On one 321 of the jaws 321, 322 of the gripper 32 a funnel device 40 is supported and on another 322 of the jaws 321, 322 the collection container 4 can be supported.

According to one aspect of the present invention, the funnel device 40 is in itself subject matter of the present invention. Furthermore, according to one aspect, also the end-effector 31 in itself is subject matter of the present invention.

In accordance with one embodiment, the funnel device 40 comprises an inner funnel cavity 41 and an outlet channel 42. In the inner funnel cavity 41 a closing body 43 is installed comprising a central region 431 shaped to seal an access mouth 4' of the collection container 4 when the access mouth 4' abuts against the central region 431. In said closing body 43 one or more through openings 432 are obtained suitable for allowing the passage of bulk material towards the inner funnel cavity 41.

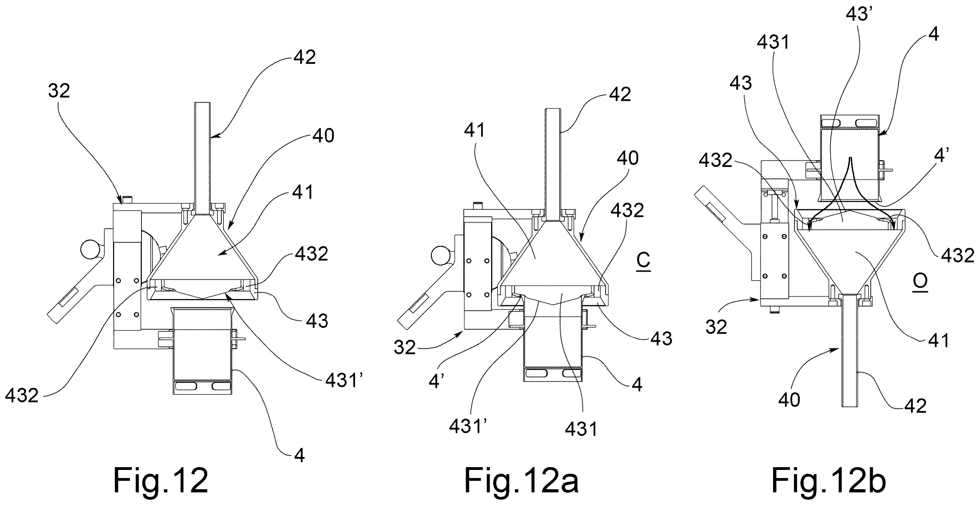

Preferably, the gripper 32 is movable in a closed configuration C, wherein the jaws 321, 322 are closed and the access mouth 4' abuts against the central region 431 so as to prevent the escape of bulk material from the collection container 4, as for example shown in figure 12a. Furthermore, the gripper 32 is movable in an open configuration O, wherein the jaws 321, 322 are open, the collection container 4 and the funnel device 40 are overturned by 180° and the access mouth 4' is not in contact with the central region 431. In this way the escape of bulk material from the access mouth 4' into the inner funnel cavity 41 and thus into the outlet channel 42 is favoured, as for example shown in figure 12b.

In accordance with one embodiment, the central region 431 of the closing body comprises a conical central surface 431' suitable for abutting against the access mouth 4' of the collection container 4 when the gripper 32 is in the closed configuration C.

Preferably, the one or more through openings 432 are obtained around the central region 431 in a more peripheral region of the funnel device 40, so that the conical central surface 431' conveys the bulk material towards the one or more through openings 432.

Preferably, the through opening 432 is a single annular opening arranged all around the conical central surface 431', in particular at the base of the conical central surface 431'.

It is clear that the present invention also concerns a method of dosing bulk material in a collection container 4 up to a preset target weight.

The dosing method comprises the following steps, preferably carried out in the order indicated below:
a) providing a dosing system 100 according to any one of the embodiments described in the present description, wherein the first receptacle 10 accommodates the first bulk material and the second receptacle 10' accommodates the second bulk material, having a size different from the size of the first bulk material, preferably a smaller size;
b) activating the vibrator device 2 associated with the first receptacle 10 to move forward the first bulk material in the discharge direction D until discharging a first dose of first bulk material into the collection container 4 which deviates from the target weight by a first predetermined amount, for example which is 12 grams lower than the preset target weight;
c) activating the vibrator device 2 associated with the first receptacle 10 to move back the first bulk material in the backward direction B for a first preset backward movement time interval;
d) activating the vibrator device 2' associated with the second receptacle 10' to move forward the second bulk material in the discharge direction D until discharging a final dose of second bulk material into the collection container 4 so as to achieve a total dose of first bulk material and second bulk material in the collection container 4 up to the preset target weight.

Preferably, at the end of step c), the method provides a step wherein at least in a terminal portion of the first evacuation channel 11 or of the second evacuation channel 11', near the collection container 4, the arrangement of the granules of the first bulk material or of the second bulk material is in a single row, without granules being stacked one on top of the other, but for example with one granule placed next to the following one resting inside the groove of the V-section or U-section of the first evacuation channel 11 or of the second evacuation channel 11'. As already described previously, this therefore makes it possible to discharge one granule at a time into the collection container 4 when the vibrator device 2, 2' is again actuated in the discharge direction D, ensuring greater dosing precision and accuracy.

In accordance with one embodiment, the method provides that, before step d) and after step c), the following steps are carried out, preferably in the order indicated:
c1) activating the vibrator device 2' associated with the second receptacle 10' to move forward the second bulk material in the discharge direction D until discharging a first dose of second bulk material into the collection container 4 so as to achieve a partial dose of first bulk material and second bulk material in the collection container 4 which deviates from the preset target weight by a second predetermined amount, lower than the first predetermined amount, for example so that the partial dose is 1.5 grams lower than the target weight;
c2) activating the vibrator device 2' associated with the second receptacle 10' to move back the second bulk material in the backward direction B for a second preset backward movement time interval.

In accordance with one embodiment, the method provides that, before step d) and after step c), the following steps are carried out, preferably in the order indicated:
c0) before step c1), activating the vibrator device 2 associated with the first receptacle 10 to move forward the first bulk material in the discharge direction D until discharging a second dose of first bulk material into the collection container 4 so as to achieve a partial dose of first bulk material which deviates from the preset target weight by a third predetermined amount, lower than the first predetermined amount and preferably greater than the second predetermined amount, for example so that the partial dose is 5 grams lower than the target weight.

In accordance with one embodiment and by way of example for a better comprehension of the dosing method, the method comprises the following steps in the order indicated:
a) providing a dosing system 100 according to any one of the embodiments described in the present description, wherein the first receptacle 10 accommodates the first bulk material with coarse granules and the second receptacle 10' accommodates the second bulk material, having a smaller size, that is with finer granules;
b) activating the vibrator device 2 associated with the first receptacle 10 to move forward the coarse-grained first bulk material in the discharge direction D until discharging a first dose of first bulk material into the collection container 4 which deviates from the target weight by a first amount, for example equal to 12 grams, that is so that the amount of coarse-grained first bulk material is 12 grams lower than the preset target weight;
c) activating the vibrator device 2 associated with the first receptacle 10 to move back the coarse-grained first bulk material in the backward direction B for a first preset backward movement time interval, for example for one second;
c0) activating the vibrator device 2 associated with the first receptacle 10 to move forward the coarse-grained first bulk material in the discharge direction D until discharging a second dose of first gold bulk material into the collection container 4 so as to achieve a partial dose of first bulk material in the collection container 4 which deviates from the preset target weight by a third predetermined amount, for example equal to 5 grams, lower than the first predetermined amount and preferably greater than a second predetermined amount, for example so that the partial dose is 5 grams lower than the target weight;
c1) activating the vibrator device 2' associated with the second receptacle 10' to move forward the fine-grained second bulk material in the discharge direction D until discharging a first dose of fine-grained second bulk material into the collection container 4 so as to achieve a partial dose of first bulk material and second bulk material in the collection container 4 which deviates from the preset target weight by a second predetermined amount, for example equal to 1.5 grams, lower than the first predetermined amount and preferably also lower than the second predetermined amount, for example so that the partial dose of first bulk material and second bulk material is only 1.5 grams lower than the target weight;
c2) activating the vibrator device 2' associated with the second receptacle 10' to move back the fine-grained second bulk material in the backward direction B for a second preset backward movement time interval, for example for one second.
d) activating the vibrator device 2' associated with the second receptacle 10' to move forward the fine-grained second bulk material in the discharge direction D until discharging a final dose of fine-grained second bulk material into the collection container 4 so as to achieve a total dose of first bulk material and second bulk material in the collection container 4 equal to the preset target weight, with a margin of error that the skilled person can understand to be due at least to the limits of precision and accuracy of the weighing device 3.
Innovatively, the present invention makes it possible to brilliantly overcome the drawbacks mentioned with reference to the prior art.

In particular, thanks to the invention, a dosing assembly, a system and a dosing method are made available which surprisingly do not require the use of an additional weight correction device to reach the preset target weight, such as for example a gold wire cutting system in the field of dosing gold granules.

In an innovative manner, this makes it possible to obtain homogeneous and highly traceable production batches in an effective and efficient way, for example homogeneous and highly traceable gold ingots.

Furthermore, thanks to the use of vibrator devices moved both in the direction favouring the discharge of bulk material and in the direction favouring the backward movement of the bulk material, so that it is arranged in a row formed by single granules placed one next to the other, it is possible to control extremely precisely the quantity of granules discharged into the collection container, thus avoiding possible machine stoppages or discards of containers due to incorrect weight, thereby increasing the overall efficiency of the system.

Furthermore, the dosing assembly according to the present invention makes it possible to achieve relatively high precision in very short times. For example, in the case of dosing gold granules, a precision even lower than 10 milligrams is obtained with dosing times of the target dose in the collection container even lower than twenty seconds. This is due to the precision and speed of discharge of the bulk material thanks to the vibrator devices and to the consequent possibility of avoiding the use of additional weight correction devices (which is generally a slower operation and which adds to the classic operation of discharging bulk material).

Advantageously, furthermore, the presence of balancing masses on the eccentrics makes it possible to have two vibrators arranged on the same base without the vibrations of one vibrator device affecting the other receptacle, thus avoiding unwanted accidental discharges of bulk material.

Further advantageously, the end-effector of the robot provided with the funnel device allows a quick pick-up of the collection container 4 and the discharge of the bulk material elsewhere (for example in a respective bracket intended for a furnace for melting precious metals), without further intermediate steps of release and pick-up of the collection container. Furthermore, such funnel device allows the direct transfer of the collection container from the rotating table to the discharge elsewhere with a single movement of the robotic manipulator and therefore without intermediate pause steps for the release and pick-up of the collection container, also avoiding the risk of accidentally discharging granules of bulk material during any movement of the end-effector, thanks to the sealed closure of the funnel device.

It is clear that a skilled person, in order to meet contingent needs, could make modifications to the invention all contained within the scope of protection as defined by the following claims.

## Claims

1. A bulk material dosing assembly (1), for example a material in granular or particulate form, for a bulk material dosing system (100) suitable for dosing an amount of bulk material, in a collection container (4), wherein said dosing assembly (1) comprises a first receptacle (10) suitable for containing a first bulk material having a first size, and a second receptacle (10') suitable for containing a second bulk material having a second size, different from the first size, preferably a smaller size;
wherein, for each of said first receptacle (10) and said second receptacle (10'), the dosing assembly comprises a respective vibrator device (2, 2') operatively connected to the respective first receptacle (10) and to the respective second receptacle (10') to cause it to vibrate;
said dosing assembly (1) further comprising:
- a weighing device (3), suitable for detecting the weight of the amount of first bulk material and second bulk material in a collection container (4) and discharged from the first receptacle (10) and the second receptacle (10');
- an electronic control unit (5) configured to command the vibrator device (2, 2') based on the weight detected by the weighing device (3) and send a control signal to the vibrator device (2, 2') to vibrate the first receptacle (10) or the second receptacle (10') so as to move forward the first bulk material or the second bulk material in a discharge direction (D) towards the collection container (4);
said dosing assembly (1) being **characterized in that** the electronic control unit (5) is configured to send a control signal to the vibrator device (2, 2') to move the first bulk material or the second bulk material back in a backward direction (B), opposite the discharge direction (D) .

2. Dosing assembly (1) according to claim 1, without an additional weight correction device suitable for correcting the weight of the bulk material contained in the collection container (4) by the addition of further material, other than the bulk material contained in the first receptacle (10) and/or in the second receptacle (10').

3. Dosing assembly (1) according to claim 1, without an additional weight correction device suitable for correcting the weight of the bulk material contained in the collection container (4) by means of a device for discarding material from the collection container (4) or for discarding the entire collection container (4).

4. Dosing assembly (1) according to claim 1 or 2 or 3, comprising at least a first balancing mass (6) mounted to each vibrator device (2, 2') having a mass such as to dampen the undesired vibrations and reduce the transmission of the vibrations from the first receptacle (10) to the second receptacle (10') or vice versa.

5. Dosing assembly (1) according to any one of the preceding claims, comprising a first evacuation channel (11) joined to the first receptacle (10) and a second evacuation channel (11') joined to the second receptacle (10'),
said dosing assembly (1) further comprising a first partialization device (12) associated with the first evacuation channel (11) and a second partialization device (12') associated with the second evacuation channel (11'), each of said first partialization device (12) and second partialization device (12') being suitable for interacting with the first evacuation channel (11) and the second evacuation channel (11'), respectively, to adjust the bulk material flow flowing into each first evacuation channel (11) and second evacuation channel (11') from the first receptacle (10) towards the collection container (4) and from the second receptacle (10') towards the collection container (4), respectively.

6. Dosing assembly (1) according to claim 5, wherein the first partialization device (12) and the second partialization device (12') each comprise a respective gate operating device (122, 122') and a respective gate (121, 121') operatively connected to the respective gate operating device (122, 122') to be moved with respect to the respective first evacuation channel (11) or second evacuation channel (11') and thus increase or decrease the passage of bulk material downstream of the gate (121, 121') in the direction towards the collection container (4).

7. Dosing assembly (1) according to claim 6, comprising a flow detection device (7), such as a video camera, for example, suitable for detecting a flow signal relative to the bulk material flow in the first evacuation channel (11) and/or second evacuation channel (11'),
wherein the gate operating device (122, 122') is controllable by a gate control command to determine the position of the gate (121, 121'),
and wherein the electronic control unit (5) is configured to command the gate operating device by means of a gate control command based on the flow signal from the flow detection device (7).

8. Dosing assembly (1) according to claim 7, wherein the electronic control unit (5) is configured to command the vibrator device (2, 2') to move forward the first bulk material or the second bulk material with increasing speeds, and in case of detection of a bulk material flow below a certain preset threshold, the electronic control unit (5) is configured to send a gate control command to further open the gate (121, 121'), for example to dislodge any bulk material with too large a size.

9. Dosing assembly (1) according to any one of the preceding claims, comprising a filling detection device suitable for detecting the filling state of the first receptacle (10) and/or the second receptacle (10').

10. A dosing system (100) comprising a dosing assembly (1) according to any one of the preceding claims and a collection container transport system (20) suitable for carrying the collection containers (4) to and from the weighing device (3).

11. Dosing system (100) according to claim 10, wherein the collection container transport system (20) comprises a base (25) and a rotating table (21) rotatably supported by the base and comprising container seats (210, 211, 212), each container seat (210, 211, 212) being suitable for receiving a collection container (4), and wherein the rotating table (21) is suitable for being rotated to bring each container seat close to the weighing device (3) in a selective manner.

12. Dosing system (100) according to claim 11, wherein the rotating table (21) is supported by the base (25) in a relatively translatable manner with respect to the weighing device (3) along a vertical direction (Y) parallel to the rotation axis of the rotating table (21) or along a direction parallel to the force of gravity.

13. Dosing system (100) according to any one of claims 10 to 12 comprising a robotic manipulator (30) configured to pick up and deposit the collection container (4) from/onto the rotating table (21) and discharge the bulk material elsewhere.

14. Dosing system (100) according to claim 13, wherein the robotic manipulator (30) comprises an end-effector (31) to which a gripper (32) is mounted and wherein a funnel device (40) is supported on one (321) of the jaws (321, 322) of the gripper (32) and the collection container (4) is supportable on another (322) of the jaws (321, 322),
wherein the funnel device (40) comprises an inner funnel cavity (41) and an outlet channel (42),
and wherein a closing body (43) is installed in the inner funnel cavity (41), comprising a central region (431) shaped to seal an access mouth (4') of the collection container (4) when the access mouth (4') abuts against the central region (431),
one or more through openings (432) being obtained in said closing body (43), suitable for allowing the bulk material to pass towards the inner funnel cavity (41), and wherein the gripper (32) is movable in a closed configuration (C), in which the jaws (321, 322) are closed and the access mouth (4') abuts against the central region (431) so as to prevent the bulk material from escaping from the collection container (4), and an open configuration (O), in which the jaws (321, 322) are open, the collection container (4) and the funnel device (40) are overturned by 180° and the access mouth (4') is not in contact with the central region (431) so that the escape of bulk material from the access mouth (4') into the inner funnel cavity (41) and thus into the outlet channel (42) is favoured.

15. Dosing system (100) according to claim 14, wherein the central region (431) of the closing body comprises a conical central surface (431') suitable for abutting against the access mouth (4') of the collection container (4) when the gripper (32) is in the closed configuration (C),
and wherein the one or more through openings (432) are obtained around the central region (431) in a more peripheral region of the funnel device (40), so that the conical central surface (431') conveys the bulk material towards said one or more through openings (432).

16. A method of dosing bulk material in a collection container up to a preset target weight, comprising the following steps:
a) providing a dosing system (100) according to any one of claims 10 to 15, wherein the first bulk material is accommodated in the first receptacle (10) and the second bulk material, having a different size from the size of the first bulk material, is accommodated in the second receptacle (10');
b) activating the vibrator device (2) associated with the first receptacle (10) to move forward the first bulk material in the discharge direction (D) until a first dose of first bulk material is discharged into the collection container (4), which deviates from the target weight by a first predetermined amount, which is 12 grams less than the predetermined target weight, for example;
c) activating the vibrator device (2) associated with the first receptacle (10) to move the first bulk material back in the backward direction (B) for a first preset backward movement time interval;
d) activating the vibrator device (2') associated with the second receptacle (10') to move forward the second bulk material in the discharge direction (D) until a first dose of second bulk material is discharged into the collection container (4) so as to achieve a total dose of first bulk material and second bulk material in the collection container (4) up to the preset target weight.

17. Method according to claim 16, wherein, before step d), the method includes the following steps:
c1) activating the vibrator device (2') associated with the second receptacle (10') to move forward the second bulk material in the discharge direction (D) until a first dose of second bulk material is discharged into the collection container (4) so as to achieve a partial dose of first bulk material and second bulk material in the collection container (4), which deviates from the preset target weight by a second predetermined amount less than the first predetermined amount, for example so that the partial dose is 1.5 grams less than the target weight;
c2) activating the vibrator device (2') associated with the second receptacle (10') to move the second bulk material back in the backward direction (B) for a second preset backward movement time interval.

18. Method according to claim 16, wherein, before step d), the method includes the following step:
c0) before step c1), activating the vibrator device (2) associated with the first receptacle (10) to move forward the first bulk material in the discharge direction (D) until a second dose of first bulk material is discharged into the collection container (4) so as to achieve a partial dose of first bulk material in the collection container (4), which deviates from the preset target weight by a third predetermined amount, which is less than the first predetermined amount and preferably greater than the second predetermined amount, for example so that the partial dose is 5 grams less than the target weight.
